# EUROPEAN PATENT APPLICATION

(11) **EP 3 059 823 A1**
(43) Date of publication of application: **24.08.2016**
(21) Application number: 15155861.6
(22) Date of filing: 20.02.2015
(51) Int. Cl.: H02G 3/12

(54) **Mounting box**

(71) Applicant: ABB Oy, 00380 Helsinki (FI)
(72) Inventor: Andersson, Johan, 06100 Porvoo (FI); Luomi, Juho, 06100 Porvoo (FI); Tervo, Pekka, 06100 Porvoo (FI)
(74) Representative: Kolster Oy Ab

(57) **Abstract**

A mounting box comprising a box case (2) defining a mounting space for accommodating an electrical component, and having a box opening (22) for receiving the electrical component into the mounting space, an edge of the box opening (22) defining a box plane, and fastening means for fastening the mounting box to a wall structure with at least one fastening screw (5). The fastening means is adapted to receive at least one fastening screw (5) in a predetermined fastening position in which the at least one fastening screw (5) extends in a fastening angle (α) with relation to a normal vector of the box plane, the fastening angle (α) being in the range of 10° to 80°.

## Description

### FIELD OF THE INVENTION

The present invention relates to a mounting box.

A known mounting box, or an installation box, comprises a box case defining a mounting space, and fastening means for fastening the mounting box to a wall structure with at least one fastening screw. The mounting space is adapted to accommodate an electrical component.

One of the problems associated with a known mounting box is that when the mounting box is installed into an opening in a wall made of building log or concrete screw heads of fastening screws are located on the front surface of the wall thereby hindering installation of an electrical component into the mounting space. The screw heads protruding from the front surface of the wall hinder installation of any cover structure that is adapted to be in contact with the front surface of the wall.

### BRIEF DESCRIPTION OF THE INVENTION

An object of the present invention is to provide a mounting box so as to solve the above problem.

The objects of the invention are achieved by a mounting box which is characterized by what is stated in the independent claim. The preferred embodiments of the invention are disclosed in the dependent claims.

The invention is based on the idea that the fastening screws extend in a fastening angle with relation to a normal vector of the wall such that the fastening screws enter the wall through a lateral surface of the opening in which the mounting box is received.

An advantage of the mounting box of the invention is that there are no screw heads protruding from the front surface of the wall.

### BRIEF DESCRIPTION OF THE DRAWINGS

In the following the invention will be described in greater detail by means of preferred embodiments with reference to the attached drawings, in which
Figure 1 shows a mounting box according to an embodiment of the invention;
Figure 2 shows the mounting box of Figure 1 with two fastening screws;
Figure 3 shows the mounting box of Figure 2 installed in an opening in a wall; and
Figure 4 shows a cross section of the assembly of Figure 3.

### DETAILED DESCRIPTION OF THE INVENTION

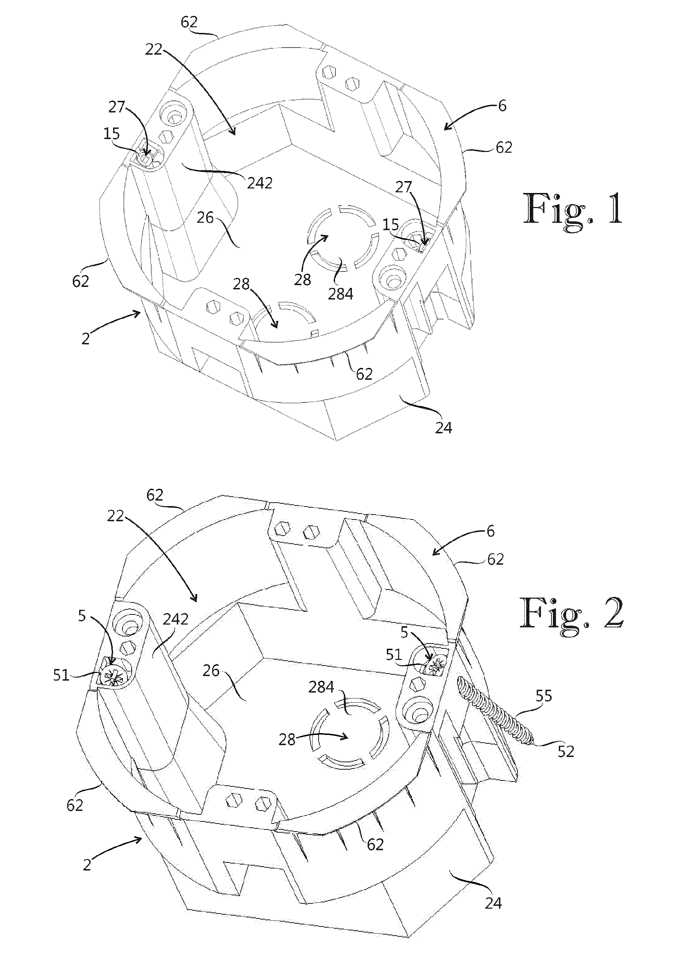

Figure 1 shows a mounting box comprising a box case 2, collar means 6 attached to the box case 2, and fastening means for fastening the mounting box to a wall structure with two fastening screws. Figure 2 shows the mounting box of Figure 1 with two fastening screws 5, each of which is a headed screw provided with a screw head 51.

The box case 2 defines a mounting space for accommodating an electrical component such as a wall socket or a light switch, and has a box opening 22 providing an access into the mounting space. The box opening 22 is adapted for receiving the electrical component into the mounting space. An edge of the box opening 22 defines a box plane.

The mounting box has an axial direction which is perpendicular to the box plane. An imaginary center axis of the box case 2 is parallel to the axial direction of the mounting box, and traverses the box opening 22 in the middle of the box opening 22. A lateral direction of the mounting box is a direction perpendicular to the imaginary center axis of the box case 2.

The box case 2 comprises a side wall 24 defining a lateral boundary of the mounting space, and a bottom wall 26 defining an axial boundary of the mounting space. The bottom wall 26 comprises two installation apertures 28 adapted to provide a passage for electric wires between exterior of the box case 2 and the mounting space.

Each installation aperture 28 is blocked by a removable shield plug 284. Each removable shield plug 284 is an integral part of the box case 2. Each removable shield plug 284 is adapted to be cut off in order to enable introducing of electric wires through corresponding installation aperture 28. Cutting off the removable shield plug 284 is easy since the removable shield plug 284 is only supported to rest of the box case 2 through four narrow supporting members. During installation of the mounting box an electrician removes one shield plug 284 or both shield plugs 284. The number of shield plugs removed depends on how many electric wires must pass through the bottom wall. If only one shield plug 284 is removed, the other shield plug protects the mounting space against dirt and foreign bodies. In alternative embodiments the mounting box comprises one or more removable shield plugs.

The mounting box of Figure 1 is a retrofit mounting box adapted to be installed into an opening in a wall by pushing the mounting box into the opening in the wall from a first side of the wall. In use the collar means 6 is adapted to be in contact with the first side of the wall, in the vicinity of the edge of the opening. The collar means 6 projects from the box case 2 in lateral direction. The maximum diameter of the collar means 6 is greater than the maximum diameter of the box case 2 such that the collar means 6 is capable of engaging an edge of an opening through which the box case 2 fits. In other words, the collar means 6 is adapted to prevent the mounting box from sinking completely into the opening in the wall.

The collar means 6 comprises four collar members 62. The collar means 6 defines a collar plane which is parallel to the box plane. The collar plane is adapted to be parallel to a wall plane defined by the wall. The collar means 6 is an integral part of the box case 2 and manufactured from the same material as the box case 2.

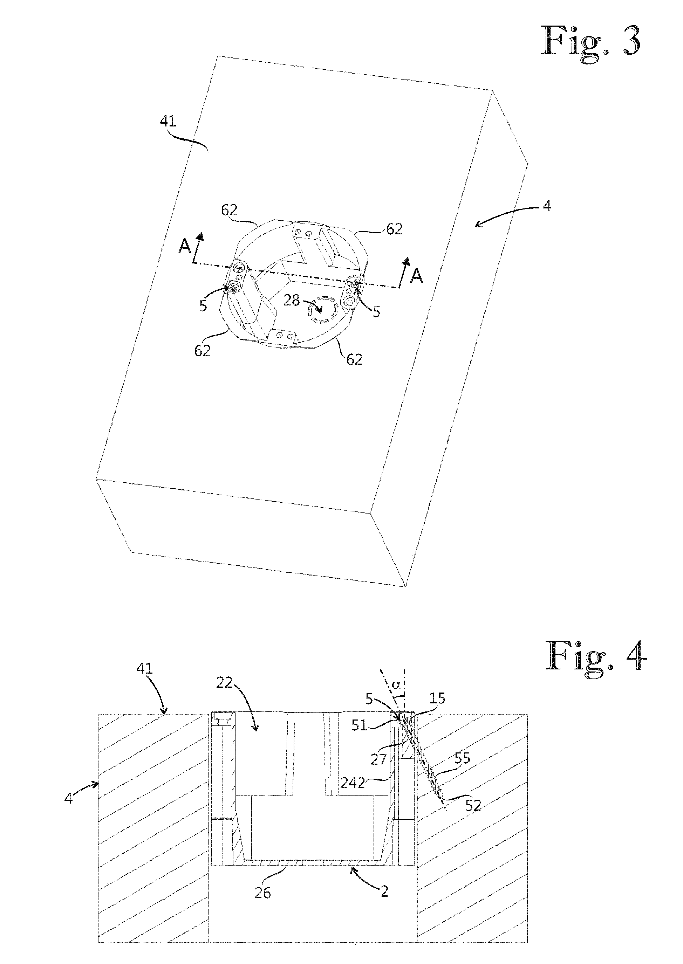

Figure 3 shows the mounting box of Figure 2 installed in an opening in a wall 4. Each of the four collar members 62 is in contact with the first side 41 of the wall 4, in the vicinity of the edge of the opening. Relative movement between the wall 4 and the mounting box is prevented by the fastening screws 5.

Fastening screws 5 are selected such that they are compatible with the material of the wall 4. Since in many embodiments threads of the fastening screws are adapted to cut a helical groove in the wall, it is typically appropriate to select fastening screws whose material is harder than the material of the wall. In an embodiment the fastening screws are made of steel and the material of the wall comprises wood. In another embodiment the material of the wall comprises concrete.

The fastening means of the mounting box of Figure 1 is adapted to receive two fastening screws. In alternative embodiments fastening means is adapted to receive at least one fastening screw. A mounting box according to the invention may be sold with or without the fastening screws.

Figure 4 shows a cross-section of the assembly of Figure 3. Only one of the fastening screws 5 is depicted in Figure 4. Position for the other fastening screw is not visible in Figure 4 since the cross-section is taken along line A - A shown in Figure 3. A threaded portion 55 of each fastening screw 5 is inside the wall 4 co-operating with a material of the wall 4. The co-operation between the threaded portion 55 and the material of the wall 4 prevents longitudinal movement of the fastening screw 5 relative to the wall 4. Figure 4 shows that the fastening screw 5 enters the wall 4 through a lateral surface of the opening in which the mounting box is received. The fastening screw 5 does not contact the first side 41 of the wall 4 in any way.

The fastening means comprises a screw hole 27 and a supporting surface 15 for each of the fastening screws 5. In the embodiment of Figure 1 each of the screw holes 27 is a closed hole which does not have any threads. The box case 2 is made of plastic so it is quite easy to puncture the closed hole and optionally to form threads into the screw hole 27 with a fastening screw made of metal. In an alternative embodiment a screw hole of the fastening means is an open unthreaded hole. In a further alternative embodiment a screw hole of the fastening means is an open threaded hole.

The supporting surface 15 is adapted to co-operate in use situation with a screw head 51 of corresponding fastening screw 5 for preventing relative movement between the screw head 51 and the supporting surface 15. Each supporting surface 15 is located below the box plane and below a contact surface of the collar means 6, the contact surface being the surface which is adapted to be in contact with the first side 41 of the wall 4. Further, each supporting surface 15 is located such that in Figure 4 the screw head 51 of the fastening screw 5 is located below a first surface 41 of the wall 4.

Each supporting surface 15 is located axially close to the edge of the box opening 22, and laterally close to an outer periphery of the box case 2. Each supporting surface 15 is located axially in an upper fifth of the box case 2. Each supporting surface 15 is located such that a lateral distance between the outer periphery of the box case 2 and an innermost portion of the supporting surface 15 is less than or equal to a fifth of a diameter of the box case 2.

The fastening means is adapted to receive each fastening screw 5 in a predetermined fastening position in which a screw head 51 of the fastening screw 5 is in contact with a corresponding supporting surface 15, and the fastening screw 5 extends in a fastening angle α with relation to a normal vector of the box plane. In Figure 2 the fastening screws 5 are in the predetermined fastening position wherein each of the fastening screws 5 protrudes from the side wall 24 of the box case 2. The fastening angle α is directed such that a distal end 52 of the fastening screw 5 is located laterally outwardly from a screw head 51 of the fastening screw 5.

In the embodiment of Figure 4 the fastening angle α is approximately 25°. In alternative embodiments the fastening angle α is in the range of 10° to 80°.

Referring to Figure 4 a longitudinal direction of the screw hole 27 extends in a fastening angle α with relation to a normal vector of the box plane. The longitudinal direction of the screw hole 27 coincides with a longitudinal direction of the fastening screw 5. The fastening position of the fastening screw 5 is predetermined because the screw hole 27 has a longitudinal dimension which is sufficient to keep the longitudinal direction of the fastening screw 5 parallel to the longitudinal direction of the screw hole 27. A diameter of the screw hole 27 is substantially the same as a diameter of the fastening screw 5.

The fastening angle α is substantially a fixed angle. However, it is to be understood that tolerances between an inner surface of the screw hole 27 and an outer surface of the fastening screw 5 create some variation in the fastening angle. It is also clear that in typical embodiments the fastening angle may vary several degrees without any practical significance.

The fastening means is formed such that in use situation the fastening screws 5 are not accessible from the mounting space in lateral direction. A blocking wall 242 restricts lateral access from the mounting space to the fastening screw 5. The blocking wall 242 extends upwards close to the box plane. An upper edge of the blocking wall 242 is closer to the box plane than any part of the fastening screw 5 whose screw head 51 is in contact with corresponding supporting surface 15.

Axial distance between the box plane and the blocking wall 242 is approximately 1 millimetre. In an alternative embodiment an axial distance between the box plane and the blocking wall is in the range of 0 to 3 millimetres. In embodiments where the blocking wall does not extend upwards all the way to the box plane, the axial distance between the box plane and the blocking wall is selected such that an electrically conductive contact between the at least one fastening screw received by the fastening means and an electrical component or an electric wire accommodated in the mounting space is prevented. The same applies to any lateral holes between the mounting space and the at least one fastening screw. The lateral holes must be small enough to prevent said electrically conductive contact. In an embodiment both the axial distance between the box plane and the blocking wall and size of any lateral holes between the mounting space and the at least one fastening screw are selected such that the mounting box complies with relevant electrical safety regulations.

It should be noted that in general it is not necessary to form the fastening means such that the fastening means restricts a curvilinear access route between the mounting space and the at least one fastening screw, the curvilinear access route passing through the box plane. In a finished installation a mounting box is covered with an insulating cover plate which substantially prevents said curvilinear access route. Consequently it is only necessary to restrict access routes between the mounting space and the at least one fastening screw which do not pass through the box plane.

It is possible to screw each fastening screw 5 into the predetermined fastening position with a screw driver provided with a straight shaft such that the shaft of the screw driver is outside the mounting space during the entire screwing process. This is achieved by locating the supporting surfaces 15 axially close to the edge of the box opening 22.

The fastening means is an integral part of the box case 2 and manufactured from the same material as the box case 2. In an embodiment the entire mounting box is manufactured from same plastic material with a single moulding process such as an injection moulding process.

It will be obvious to a person skilled in the art that the inventive concept can be implemented in various ways. The invention and its embodiments are not limited to the examples described above but may vary within the scope of the claims.

## Claims

1. A mounting box comprising:
a box case (2) defining a mounting space for accommodating an electrical component, and having a box opening (22) for receiving the electrical component into the mounting space, an edge of the box opening (22) defining a box plane; and
fastening means for fastening the mounting box to a wall structure with at least one fastening screw (5) provided with a screw head (51), the fastening means comprising a supporting surface (15) for each of the at least one fastening screw (5), the supporting surface (15) being adapted to co-operate in use situation with a screw head (51) of corresponding fastening screw (5) for preventing relative movement between the screw head (51) and the supporting surface (15),
**characterized in that** the fastening means is adapted to receive at least one fastening screw (5) in a predetermined fastening position in which a screw head (51) of at least one fastening screw (5) is in contact with a corresponding supporting surface (15), and the at least one fastening screw (5) extends in a fastening angle (α) with relation to a normal vector of the box plane, the fastening angle (α) being in the range of 10° to 80°, the fastening angle (α) is directed such that a distal end (52) of the at least one fastening screw (5) is located laterally outwardly from a screw head (51) of the at least one fastening screw (5), and each supporting surface (15) is located below the box plane.

2. A mounting box according to claim 1, **characterized in that** the fastening means is an integral part of the box case (2).

3. A mounting box according to claim 1 or 2, **characterized in that** the fastening means is formed such that in use situation accessibility of the at least one fastening screw (5) from the mounting space is restricted in order to prevent an electrically conductive contact between the at least one fastening screw (5) received by the fastening means and an electrical component or an electric wire accommodated in the mounting space.

4. A mounting box according to claim 3, **characterized in that** the fastening means is formed such that accessibility between the mounting space and the at least one fastening screw fulfils relevant electrical safety regulations.

5. A mounting box according to any one of preceding claims, **characterized in that** the fastening means comprises a screw hole (27) for each of the at least one fastening screw (5), a longitudinal direction of the screw hole (27) extending in the fastening angle (α) with relation to the normal vector of the box plane.

6. A mounting box according to claim 5, **characterized in that** each of the screw holes (27) is a closed hole, an unthreaded hole or a threaded hole.

7. A mounting box according to any one of preceding claims, **characterized in that** each supporting surface (15) is located axially close to the edge of the box opening (22), and laterally close to an outer periphery of the box case (2).

8. A mounting box according to claim 7, **characterized in that** each supporting surface (15) is located axially in an upper fifth of the box case (2).

9. A mounting box according to claim 7 or 8, **characterized in that** each supporting surface (15) is located such that a lateral distance between the outer periphery of the box case (2) and an innermost portion of the supporting surface (15) is less than or equal to a fifth of a diameter of the box case (2).

10. A mounting box according to claim 3 or 4, **characterized in that** the fastening means is formed such that it is possible to screw at least one fastening screw (5) into the predetermined fastening position with a screw driver provided with a straight shaft such that the shaft of the screw driver is outside the mounting space during the entire screwing process.

11. A mounting box according to any one of preceding claims, **characterized in that** the mounting box is adapted to be installed into an opening in a wall (4) by pushing the mounting box into the opening in the wall from a first side (41) of the wall, the mounting box comprising collar means (6) attached to the box case (2) and adapted to be in contact with the first side (41) of the wall (4) by a contact surface, the collar means (6) defining a collar plane adapted to be parallel to a wall plane defined by the wall (4), the collar plane being parallel to the box plane.

12. A mounting box according to claim 11, **characterized in that** each supporting surface (15) is located below the contact surface of the collar means (6).

13. A mounting box according to claim 11 or 12, **characterized in that** the collar means (6) is an integral part of the box case (2) and manufactured from the same material as the box case (2).

14. A mounting box according to any one of preceding claims, **characterized in that** the box case (2) comprises a side wall (24) defining a lateral boundary of the mounting space, and a bottom wall (26) defining an axial boundary of the mounting space, the bottom wall (26) comprising at least one installation aperture (28) adapted to provide a passage for electric wires between exterior of the box case (2) and the mounting space.
